# EUROPEAN PATENT SPECIFICATION

(11) **EP 0 403 447 B1**
(45) Date of publication and mention of the grant of the patent: **05.01.1994**
(21) Application number: 90830266.4
(22) Date of filing: 12.06.1990
(51) Int. Cl.: F16F 9/50, F16F 9/08, F16F 9/46

(54) **A suspension member for motor vehicles**
Aufhängungselement für Kraftfahrzeuge
Elément de suspension pour véhicules automobiles

(30) Priority: 16.06.1989 IT 6749689
(43) Date of publication of application: 19.12.1990
(73) Proprietor: FIAT AUTO S.p.A., 10135 Torino (IT)
(72) Inventor: Camuffo, Sergio, I-10131 Torino (IT)
(74) Representative: Saconney, Piero

(56) References cited:
- EP-A- 0 275 503
- DE-A- 3 526 156
- DE-A- 3 620 993
- FR-A- 2 252 508
- GB-A- 2 111 168
- GB-A- 2 155 584
- US-A- 3 266 792
- US-A- 3 421 606
- PATENT ABSTRACTS OF JAPAN, vol. 7, no. 207 (M-242)[1352], 13th September 1983;& JP-A-58 105 811 (FUJI JUKOGYO K.K.) 23-06-1983
- IDEM

## Description

The present invention relates to a suspension member for motor vehicles, comprising a telescopic hydraulic shock-absorber and an air spring.

More specifically, the invention relates to a suspension member according to the pre-characterising portion of claim 1, which is known from DE-A-35 26 156.

It is known that the air spring enables the attitude of the suspension to be kept constant with variations in load (self-levelling suspension) and also enables the stiffness of the suspension to be increased with increases in the load bearing on the suspension (isofrequential suspension). In suspensions which are subject to large variations in the working load, however, for example, the rear suspensions of front-wheel-drive motor vehicles (particularly suspensions for family cars), it is difficult to achieve the optimum calibration of the shock-absorber. Indeed, the larger the load bearing on the suspension, the greater the energy that must be dissipated by the shock-absorber and the greater the damping or braking action which the shock-absorber must achieve. In such a case, however, when the car is not loaded, the suspension is too stiff.

DE-A-35 26 156 shows a suspension member for motor vehicles, comprising a telescopic hydraulic shock-absorber and an air spring, wherein the shock-absorber has adjustment means for varying its damping action as the pressure in the air spring varies. These adjustment means include ducts provided in the shaft carrying the piston, linking the air spring with an inflatable air ring which pushes against a plate blocking the outlet of an orifice in the piston, thereby throttling the communication between the two hydraulic chambers defined on the opposite sides of the piston.

Furthermore, EP-A-275 503 shows a shock-absorber provided with a control valve which is responsive to the pressure of a gas contained in a compensation chamber.

The object of the present invention is to provide a suspension member of simplified construction and improved performances in which the damping action of the shock-absorber is coordinated with the air spring pressure.

According to the invention, this object is achieved by a suspension member according to claim 1.

Further characteristics and advantages of the present invention will become clear from the detailed description which follows with reference to the appended drawings, provided purely by way of non-limiting example, in which:
Figure 1 is an axial section of a suspension member according to the present invention, and
Figure 2 is an axial section of the part indicated by the arrow II in Figure 1, on an enlarged scale.

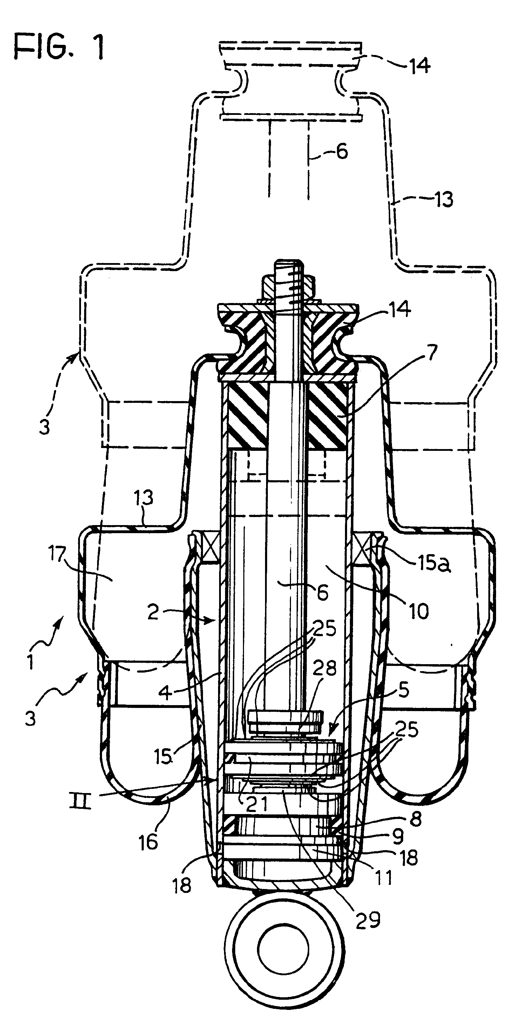

With reference to the drawings, a suspension member for motor vehicles is indicated 1 and is constituted by a hydraulic shock-absorber 2 and a coaxial air spring 3. In Figure 1, the suspension member 1 is shown in continuous outline in its shortest configuration and in broken outline in its longest configuration.

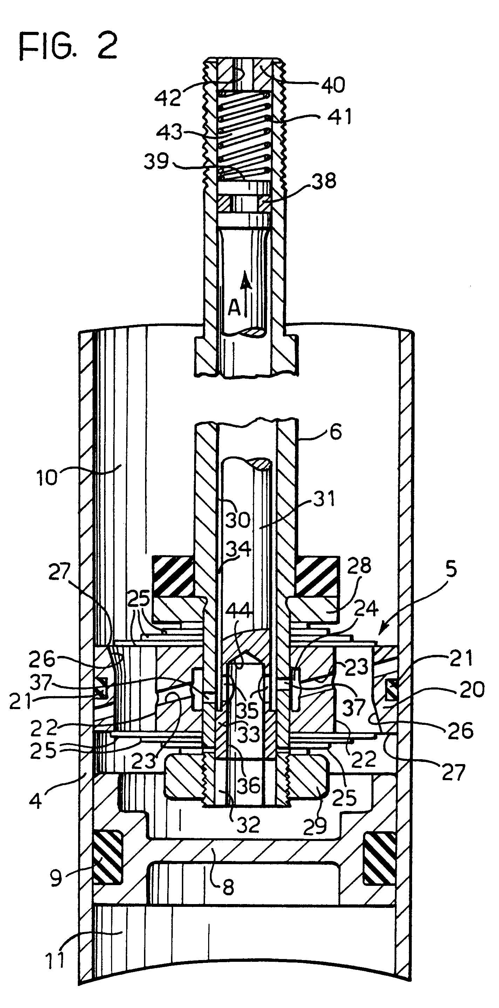

The shock-absorber 2 comprises, in known manner, a tubular body 4 within which is slidable a piston 5 carried at the end of a shaft 6 which projects from the tubular body 4 through a guide opening provided with a sealing ring 7. As shown in greater detail in Figure 2, a separating partition 8 is slidable in the tubular body 4 and carries a sealing ring 9 which divides the space within the tubular body 2 into a hydraulic chamber 10 and a pneumatic chamber 11. As is known, the function of the pneumatic chamber 11 is to compensate for variations in volume which occur in the hydraulic chamber 10 as a result of the movements of the shaft 6.

The air spring 3 includes a first, rigid casing 13 which is fixed, by means of a sealing bush 14 of elastomeric material, to the shaft 6 of the shock-absorber 2. The air spring 3 also includes a second, rigid casing 15 fixed to the tubular body 4 of the shock-absorber 2 and spaced from the outer wall thereof. Respective edges of a deformable, airtight diaphragm 16 are fixed to the end edges of the first and second casings 13, 15 of the air spring 3. The air spring 3 is connected to a pressure source (not shown) which, in known manner, varies the pressure in the space 17 within the spring 3 in proportion to the load bearing on the suspension member 1.

As seen in Figure 1, a plurality of through-holes 18 are formed in the tubular body 4 of the shock-absorber 2 and put the pneumatic chamber 11 of the shock-absorber 2 into communication with the internal space 17 within the air spring 3. The pressure in the pneumatic chamber 11 is therefore substantially equal to the pressure in the air spring 3. Consequently, given that the separating partition 8 can slide freely in the tubular body 4, the pressure in the hydraulic chamber 10 is also substantially equal to the pressure of the air spring 3 under static conditions. In static conditions, there is therefore no pressure difference across the sealing ring 7 of the shock-absorber 2 and the risk of leakage of the liquid in the hydraulic chamber 10 through the sealing ring 7 is therefore reduced.

A valve member 15a is interposed between the second rigid casing 15 of the air spring 3 and the tubular body 4 of the shock-absorber 2 and has the purpose of maintaining, if necessary during the compression stage, a pressure in the pneumatic chamber 11 which is slightly greater than that in the air spring 3.

As shown in Figure 2, the piston 5 includes a cylindrical body 20 which carries a sealing ring 21 and is formed with a plurality of holes 22 closed by resilient plates 25. The holes 22 also communicate through respective ducts 23 with an annular chamber 24 which surrounds the shaft 6. The holes 22 have respective flared portions 26 which define apertures 27 through which the liquid contained in the hydraulic chamber 10 can leak from one side of the piston 5 to the other through the plates 25 as a result of the movement of the piston. The cylindrical body 20 and the plates 25 are clamped against an annular shoulder 28 by means of a ring nut 29.

The rod 6 has a cavity 30 which extends through the entire length of the shaft 6 and in which a rod 31 can slide. At its lower end, the rod 31 bears against an annular spacer 32 and, at the end, the rod 31 has a larger-diameter side portion 33 which is in contact with the internal wall of the cavity 30. An annular chamber 34 is defined between the wall of the cavity 30 and the rod 31 and communicates with the hydraulic chamber 10 through a pair of transverse holes 35 and a longitudinal hole 36 formed in the rod 31. The annular chamber 34 also communicates with the chamber 10 through a plurality of calibrated transverse holes 37 (only 2 of which are visible in Figure 2) formed in the rod 6 and situated at different levels.

At its upper end, the rod 31 carries a sealing ring 38 which closes the top of the annular chamber 34. A helical spring 41 is interposed between the upper end 39 of the rod 31 and the end 40 of the rod 6 and urges the rod 31 against the spacer 32. The end 40 of the shaft 6 has a hole 42 which puts the space 43 above the rod 31 into communication with the atmosphere. Hence, whilst the upper surface 39 of the rod 31 is exposed to atmospheric pressure, the lower surface 44 of the rod 31 is exposed to the pressure of the liquid in the hydraulic chamber 10.

The shock-absorber 2 described above operates as follows.

When the piston 5 moves upwards relative to the tubular body 4, the liquid in the upper hydraulic chamber 10 enters the holes 22 (to the left in Figure 2) through the apertures 27. From here, in order to reach the lower part of the hydraulic chamber 10, the liquid must pass through the sealing plates 25 and through the ducts 23, the annular chamber 24, the calibrated holes 37 and the holes 35 and 36.

All these passages determine the damping action of the shock-absorber.

Similar behaviour occurs when the piston moves downwards.

In the configuration shown in Figure 2, the cross-section available for the passage of the fluid is at a maximum and the damping action of the shock-absorber 2 is therefore at a minimum.

When the load bearing on the suspension member 1 is increased, the pressure in the air spring 3 increases and the pressure in the hydraulic chamber 10 consequently also increases. As a result of the difference between the pressures acting on the lower surface 44 and on the upper surface 39 of the rod 31, the latter moves in the direction indicated by the arrow A in Figure 2 against the opposing action of the spring 41. During this movement, the side portion 33 of the rod 31 closes one or more of the holes 37, reducing the area for the passage of the hydraulic fluid and therefore increasing the damping action of the shock-absorber 2.

## Claims

1. A suspension member for motor vehicles, comprising a telescopic hydraulic shock-absorber (2) and an air spring (3), in which the shock-absorber (2) includes a tubular body (4) in which is slidable a separating portion (8) which divides the space within the tubular body (4) into a hydraulic chamber (10) and a pneumatic chamber (11) so that the pressure in the hydraulic chamber (10) and in the pneumatic chamber (11) are in mutual relation to each other, a piston (5) being slidable in the hydraulic chamber (10) and being carried by a shaft (6) which projects sealingly from the tubular body (4), wherein the piston (5) is provided with valve means for varying the damping action of the shock-absorber (2) as the pressure of the air spring (3) varies, characterised in that the pneumatic chamber (11) is in communication with the space within the air spring (3) so that the pressure in the hydraulic chamber (10) is directly related to the pressure in the air spring (3) and in that said valve means (31) are responsive to the pressure in the hydraulic chamber (10).

2. A suspension member according to claim 1, characterised in that said valve means (31) are arranged to close calibrated ducts (37) which allow communication between the opposite sides of the piston (5) when the pressure in the hydraulic chamber (10) exceeds a pre-determined reference value.

3. A suspension member according to Claim 2, characterised in that the shaft (6) is tubular in shape and carries within it a slidable rod (31) which can move between a first operative position which corresponds to the configuration in which the communication ducts (37) are completely open and a second operative position in which the ducts (37) are completely closed, the rod being biassed by resilient means (41) towards the first operative position.

4. A suspension member according to Claim 3, characterised in that the rod (31) has a first end surface (44) which is exposed to the pressure of the fluid in the hydraulic chamber (10) and a second end surface (39) which is exposed to atmospheric pressure so that an increase in the pressure in the air spring (3), and hence of the fluid in the hydraulic chamber (10), causes the rod (31) to slide against the action of the resilient means (41).

5. A suspension member according to Claim 4, characterised in that the shaft (6) has a plurality of calibrated radial holes (37) situated at different levels, and in that the rod (31) has a side portion (33) which contacts the internal surface (30) of the shaft (6) and is arranged to close the holes (37) in succession as a result of the movement of the rod (31).

6. A suspension member according to any one of the preceding claims, characterised in that a valve member (15a) can be interposed between the pneumatic chamber (11) and the interior of the air spring (3) to keep the pneumatic chamber (11) at a higher pressure than the pressure of the air spring (3) during the stage in which the pressure in the air spring (3) is decreasing.

7. A suspension member according to any one of the preceding claims, characterised in that the air spring (3) comprises a first rigid casing (13) fixed to the shaft (6) of the shock-absorber (2), a second rigid casing (15) fixed to the body (4) of the shock-absorber (2), and a deformable diaphragm (16) whose outer and inner edges are fixed to the first (13) and second (15) casings respectively.

## Patentansprüche

1. Aufhängungseinrichtung für Kraftfahrzeuge, umfassend einen teleskopischen, hydraulischen Stoßdämpfer (2) und eine Luftfeder (3), wobei der Stoßdämpfer (2) einen rohrförmigen Korper (4) umfaßt, in welchem eine Trennwand (8) verschiebbar angeordnet ist, die den Raum in dem rohrförmigen Körper (4) in eine Hydraulikkammer (10) und eine Pneumatikkammer (11) teilt derart, daß der Druck in der Hydraulikkammer (10) und in der Pneumatikkammer (11) in gegenseitiger Abhängigkeit voneinander stehen, wobei ferner ein Kolben (5) in der Hydraulikkammer (10) verschiebbar angeordnet und von einer Stange (6) gehalten ist, die abgedichtet aus dem rohrförmigen Körper (4) herausragt, wobei ferner der Kolben (5) mit Ventilmitteln versehen ist, um die Dämpfungswirkung des Stoßdämpfers (2) zu verändern, wenn der Druck der Luftfeder (3) sich andert, dadurch **gekennzeichnet,** daß die Pneumatikkammer (11) mit dem Raum innerhalb der Luftfeder (3) so in Verbindung steht, daß der Druck in der Hydraulikkammer (10) in direkter Beziehung zum Druck in der Luftfeder (3) steht und daß die Ventilmittel (31) auf den Druck in der Hydraulikkammer (10) ansprechen.

2. Aufhängungseinrichtung nach Anspruch 1, dadurch **gekennzeichnet,** daß die Ventilmittel (31) so ausgebildet sind, daß sie kalibrierte Kanäle (37), die eine Verbindung zwischen den einander abgewandten Seiten des Kolbens (5) ermöglichen, schließen, wenn der Druck in der Hydraulikkammer (10) einen vorgegebenen Bezugswert übersteigt.

3. Aufhängungseinrichtung nach Anspruch 2, dadurch **gekennzeichnet,** daß die Stange (6) rohrförmig ausgebildet ist und im Inneren einen verschiebbaren Stößel (31) aufnimmt, welcher sich zwischen einer ersten Betriebsstellung, die der Konfiguration entspricht, bei der die Verbindungskanäle (37) vollständig offen sind, sowie einer zweiten Betriebsstellung, bei der die Kanäle (37) vollständig geschlossen sind, bewegen kann, wobei der Stößel durch Federmittel (41) in Richtung der ersten Betriebsstellung vorgespannt ist.

4. Aufhängungseinrichtung nach Anspruch 3, dadurch **gekennzeichnet,** daß der Stößel (31) eine erste Endfläche (44) hat, die dem Druck der Flüssigkeit in der Hydraulikkammer (10) ausgesetzt ist, und eine zweite Endfläche (39) , die dem Atmosphärendruck ausgesetzt ist, so daß ein Zuwachs des Druckes in der Luftfeder (3) und damit der Flüssigkeit in der Hydraulikkammer (10) eine Verschiebung des Stößels (31) gegen die Wirkung der Federmittel (41) verursacht.

5. Aufhängungseinrichtung nach Anspruch 4, dadurch **gekennzeichnet,** daß die Stange (6) mehrere kalibrierte radiale Löcher (37) aufweist, die in unterschiedlichen Höhenlagen angeordnet sind, und daß der Stößel (31) einen Seitenabschnitt (33) aufweist, welcher an der inneren Fläche (30) der Stange (6) anliegt und dazu ausgelegt ist, die Löcher (37) nacheinander als Folge der Bewegung des Stößels (31) zu schließen.

6. Aufhängungseinrichtung nach einem der vorangehenden Ansprüche, dadurch **gekennzeichnet,** daß eine Ventileinrichtung (15a) zwischen der Pneumatikkammer (11) und dem Inneren der Luftfeder (3) angeordnet sein kann, um die Pneumatikkammer (11) während der Phase, in der der Druck in der Luftfeder (3) abnimmt, auf einem höheren Druck als dem Druck der Luftfeder (3) zu halten.

7. Aufhängungseinrichtung nach einem der vorangehenden Ansprüche, dadurch **gekennzeichnet,** daß die Luftfeder (3) ein erstes starres Gehäuse (13) umfaßt, welches an der Stange (6) des Stoßdämpfers (2) befestigt ist, ein zweites starres Gehäuse (15), welches am Körper (4) des Stoßdämpfers (2) befestigt ist, und eine verformbare Membran (16), deren äußere bzw. innere Kante am ersten Gehäuse (13) bzw. am zweiten Gehäuse (15) befestigt ist.

## Revendications

1. Pièce de suspension pour des véhicules à moteur comprenant un amortisseur hydraulique télescopique (2) et un ressort pneumatique (3), dans laquelle l'amortisseur hydraulique télescopique (2) comprend un corps tubulaire (4) dans lequel peut coulisser une partie de séparation (8) divisant l'espace interne du corps tubulaire (4) en une chambre hydraulique (10) et une chambre pneumatique (11) de façon à ce que les pressions dans la chambre hydraulique (10) et dans la chambre pneumatique (11) soient en relation mutuelle l'une par rapport à l'autre, un piston (5) pouvant coulisser dans la chambre hydraulique (10) et étant porté par un arbre (6) se projetant, de façon étanche, du corps tubulaire (4), pièce dans laquelle le piston (5) est muni d'un moyen de soupape pour faire varier l'action d'amortissement de l'amortisseur hydraulique télescopique (2) pendant une variation de la pression du ressort pneumatique (3),
pièce caractérisée en ce que la chambre pneumatique (11) est en communication avec l'espace interne du ressort pneumatique (3) de façon à ce que la pression dans la chambre hydraulique (10) soit directement liée à la pression dans le ressort pneumatique (3) et en ce que ledit moyen de soupape (31) est sensible à la pression dans la chambre hydraulique (10).

2. Pièce de suspension selon la revendication 1, caractérisée en ce que ledit moyen de soupape (31) est prévu pour fermer des conduits calibrés (37) permettant une communication entre les côtés opposés du piston (5) lorsque la pression dans la chambre hydraulique (10) dépasse une valeur de référence prédéterminée.

3. Pièce de suspension selon la revendication 2, caractérisée en ce que l'arbre (6) a une forme tubulaire et porte à l'intérieur une tige coulissante (31) pouvant se déplacer entre une première position fonctionnelle correspondant à la configuration dans laquelle les conduits de communication (37) sont complètement ouverts et une seconde position fonctionnelle dans laquelle les conduits (37) sont complètement fermés, la tige étant poussée par un moyen élastique (41) vers la première position fonctionnelle.

4. Pièce de suspension selon la revendication 3, caractérisée en ce que la tige (31) possède une première surface d'extrémité (44) exposée à la pression du fluide dans la chambre hydraulique (10) et une seconde surface d'extrémité (39) exposée à la pression atmosphérique de façon à ce qu'une augmentation de la pression dans le ressort pneumatique (3) et, par là, du fluide dans la chambre hydraulique (10), provoque le coulissement de la tige (31) à l'encontre de l'action du moyen élastique (41).

5. Pièce de suspension selon la revendication 4, caractérisée en ce que l'arbre (6) possède une pluralité de trous radiaux calibrés (37) situés à différents niveaux et en ce que la tige (31) possède une partie latérale (33) en contact avec la surface interne (30) de l'arbre (6) et est prévue pour fermer les trous (37) à la suite sous l'action du déplacement de la tige (31).

6. Pièce de suspension selon l'une quelconque des revendications précédentes, caractérisée en ce qu'une pièce de soupape (15a) peut être interposée entre la chambre pneumatique (11) et l'intérieur du ressort pneumatique (3) pour maintenir la chambre pneumatique (11) à une pression supérieure à celle du ressort pneumatique (3) pendant l'étape où la pression dans le ressort pneumatique (3) diminue.

7. Pièce de suspension selon l'une quelconque des revendications précédentes, caractérisée en ce que le ressort pneumatique (3) comprend une première enveloppe rigide (13) fixée à l'arbre (6) de l'amortisseur hydraulique télescopique (2), une seconde enveloppe rigide (15) fixée au corps (4) de l'amortisseur hydraulique télescopique (2) et un diaphragme déformable (16) dont les bords externe et interne sont fixés aux première (13) et seconde (15) enveloppes respectives.
